Europäisches Patentamt

European Patent Office

Office européen des brevets

(19)

(11) Veröffentlichungsnummer: **0 314 079 B1**

# (12) EUROPÄISCHE PATENTSCHRIFT

(45) Veröffentlichungstag der Patentschrift: **06.05.92**

(51) Int. Cl.⁵: **G06F 9/30**

(21) Anmeldenummer: **88117777.8**

(22) Anmeldetag: **25.10.88**

(54) **Schaltungsanordnung für Verarbeitungseinheiten einer Zentraleinheit mit einer Reihe von Mehrzweckregistern.**

(30) Priorität: **27.10.87 DE 3736352**

(43) Veröffentlichungstag der Anmeldung:
**03.05.89 Patentblatt 89/18**

(45) Bekanntmachung des Hinweises auf die
Patenterteilung:
**06.05.92 Patentblatt 92/19**

(84) Benannte Vertragsstaaten:
**AT BE CH DE FR GB IT LI NL SE**

(56) Entgegenhaltungen:
**EP-A- 0 170 284**
**EP-A- 0 220 682**

**IBM TECHNICAL DISCLOSURE BULLETIN,
Band 24, Nr. 3, August 1981, Seiten
1404-1405, New York, US; S.M. DESAI:
"General purpose register extension"**

**IBM TECHNICAL DISCLOSURE BULLETIN,
Band 25, Nr. 11B, April 1983, Seiten
5862-5866, New York, US; L.D. WHITLEY:
"Extending an instruction set to allow additional index registers"**

(73) Patentinhaber: **Siemens Nixdorf Informationssysteme AG
Otto-Hahn-Ring 6
W-8000 München 83(DE)**

(72) Erfinder: **Jokay, Zoltan
Edelweissstrasse 114
W-8021 Taufkirchen(DE)**

(74) Vertreter: **Fuchs, Franz-Josef, Dr.-Ing. et al
Postfach 22 13 17
W-8000 München 22(DE)**

## Beschreibung

Die Erfindung betrifft eine Schaltungsanordnung für Verarbeitungseinheiten einer Zentraleinheit mit einer Reihe von Mehrzweckregistern gemäß dem Oberbegriff des Patentanspruchs 1.

Bekanntlich ist die Verarbeitungseinheit einer Zentraleinheit mit einem Satz von Mehrzweckregistern ausgestattet. Herkömmliche Rechner weisen zum Beispiel 16 Mehrzweckregister auf und die einzelnen zu verarbeitenden Befehle sind in Teilfelder gegliedert, die abhängig vom jeweiligen Befehlstyp festgelegt sind. Aus jeweils einem 4-Bit langen Teilfeld kann eines von 16 Mehrzweckregistern ausgewählt werden, deren Inhalt sowohl ein Operand als auch eine Arbeitsspeicheradresse sein kann. Die Arbeitsspeicheradresse wird in der Regel durch einen festen Wert, die Distanzadresse, die in einem 12-Bit langen Teilfeld des Befehls steht, modifiziert, so daß durch die Auswahl eines Mehrzweckregisters mit einer Basisadresse als Inhalt und in Verbindung mit der Distanzadresse ein adressierbarer Speicherbereich von 4 KByte erreichbar ist. Da die zu adressierenden Daten und Programme ein Vielfaches von 4 KByte umfassen, müssen möglichst viele Mehrzweckregister als Adreßregister eingesetzt werden. Steht nicht eine genügend große Anzahl von Mehrzweckregistern zur Verfügung, so sind die als Adreßregister verwendeten Mehrzweckregister in einem Programm häufig umzuladen.

Auch kann es zu Konflikten kommen, die dadurch entstehen, daß bei paralleler Ausführung der einzelnen Befehlsabarbeitungsphasen unterschiedlicher Befehle (Pipelining), die ein- und dasselbe Mehrzweckregister benutzen, der Inhalt des Mehrzweckregisters während der Abarbeitung eines Befehls geändert wird. Die dadurch notwendig werdende Sicherstellung des alten Registerinhalts kann unter Umständen eine Verminderung der effektiven Leistung der Datenverarbeitungsanlage zur Folge haben. Zur Reduzierung der Registerumladevorgänge und der möglichen Pipelinekonflikte ist folglich eine Erhöhung der Anzahl der Mehrzweckregister wünschenswert, für deren Adressierung aber keine zusätzlichen Bits in die Teilfelder des Befehls aufgenommen werden sollen, damit der Aufbau der bisherigen Befehlstypen nicht geändert wird.

Eine Möglichkeit der Erweiterung des adressierbaren Speicherbereichs ist aus der US-Patentschrift 4 574 349 bekannt: Die Verarbeitungseinheit erhält zur Speicherung von Daten, die vom Hauptspeicher zur Verarbeitungseinheit übertragen werden, eine Anzahl von Hardware-Registern, die wesentlich größer ist als die durch vorgegebene Teilfelder der Befehle adressierbaren 16 Mehrzweckregister. Den Zugriff auf diese Hardware-Register realisieren eine Vielzahl von in Registern enthaltene Zeiger, von denen jeder mit einem der vorhandenen 16 Mehrzweckregister verbunden ist. Jedesmal, wenn ein Ladebefehl in einem Teilfeld ein Mehrzweckregister für die Datenübertragung vom Hauptspeicher zur Verarbeitungseinheit adressiert, wird dieses Mehrzweckregister durch ein Hardware-Register ersetzt, indem dem Mehrzweckregister ein Zeigerwert zugewiesen wird. Die Daten werden schließlich im Hardware-Register abgelegt.

Eine Zeiger-Speicher-Einheit weist eine der Anzahl der zuvor ausgeführten Ladebefehle entsprechende Anzahl von Eingangsinformationen auf, die jeweils aus einem Zeigerwert in Verbindung mit der Distanzadresse bestehen. Bei jedem folgenden Ladebefehl vergleicht sie den zugewiesenen Zeigerwert mit dem ihrer gespeicherten Eingangsinformationen. Sind sie identisch, so bedeutet dies, daß die von einem Hauptspeicherplatz angeforderten Daten bereits in einem der Hardware-Register gespeichert sind. Die Daten werden aus dem Hardware-Register sofort der Verarbeitungseinheit zugänglich gemacht, ohne auf die Übertragung vom Hauptspeicher warten zu müssen. Wird keine Identität festgestellt, so erzeugt eine Zeiger-Zuweis-Einheit, die mit jedem der Mehrzweckregister korrespondiert, einen neuen Zeigerwert, der in einem Register abgelegt wird und damit eine neue Eingangsinformation in der Zeigen-Speicher-Einrichtung bildet.

Zwar läßt sich eine Erweiterung des adressierbaren Speicherbereichs erzielen, jedoch nicht durch die Verwendung einer höheren Anzahl von Mehrzweckregistern, sondern durch den Ersatz der Mehrzweckregister durch viele Hardware-Register, auf die nicht unmittelbar aus einem Teilfeld des Befehls, sondern nur über eine aufwendige Zuweistechnik zugegriffen werden kann.

Die Verwendung einer höheren Anzahl von Mehrzweckregistern für eine Zentraleinheit ist aus "IBM Technical Disclosure Bulletin", Vol. 24, No. 3, August 1981, Seiten 1404 bis 1405, bekannt. Um häufiges Umladen von Registerinhalten während des Ablaufs eines Programms bei auftretenden Verzweigungen in ein Unterprogramm oder Taskwechsel zu vermeiden, wird jeweils ein neuer Registersatz durch einen gesonderten Befehl in Verbindung mit einem Setzregister zur Verfügung gestellt. Die bis zum Zeitpunkt des Taskwechsels benutzbaren Register einschließlich ihrer Inhalte werden eingefroren, so daß sich die Gesamtzahl von beispielsweise sechzehn Register, die für ein Teilprogramm jeweils bereitgestellt werden, dennoch nicht vergrößert.

Es ist daher Aufgabe der Erfindung, eine Anordnung zu schaffen, die bei geringem Aufwand in möglichst einfacher Weise die Nutzung einer über die bisherige Anzahl hinausgehenden Anzahl von Mehrzweckregistern ermöglicht.

Diese Aufgabe wird gemäß der Erfindung durch die kennzeichnenden Merkmale des Patentanspruchs 1 gelöst.

Demnach wird neben der normalen Betriebsart für die Befehlsausführung eine zweite Betriebsart eingeführt, die neben der üblichen Nutzung der Mehrzweckregister auch die Auswahl korrespondierender Zusatzregister eines zweiten Registersatzes ermöglicht. Sie erfolgt in einfacher Weise dadurch, daß die Zusatzregister wie die Mehrzweckregister durch dieselbe, in einem abhängig vom Befehlstyp vorgegebenen Teilfeld enthaltene Auswahlinformation des zu verarbeitenden Befehls angesteuert werden. Die Umschaltung auf die zusätzlichen Register erfolgt also nicht mehr bei jedem Taskwechsel oder jeder Programmverzweigung und durch einen gesonderten Befehl, wie aus "IBM Technical Disclosure Bulletin", bekannt, sondern abhängig von der jeweils gültigen Betriebsart.

Für den Fall, daß die auf diese Weise ansteuerbaren Zusatzregister Basisadressen zur Berechnung von Hauptspeicheradressen enthalten, kann die Anzahl der in den Registern verfügbaren Basisadressen erhöht und in Verbindung mit der Distanzadresse im Befehl der adressierbare Speicherbereich ohne Umladevorgänge erweitert werden, ohne daß ein zusätzliches Bit in dem vorgegebenen Teilfeld für die Registerauswahl erforderlich ist.

Damit die Inhalte der zusätzlich ansteuerbaren Register auch modifiziert werden können, sind zusätzliche neue Befehle zur Herstellung von Verbindungen zwischen einem Zusatzregister und einem Mehrzweckregister und/oder einem anderen Ort zur Übertragung von Informationen vorgesehen. Die Einführung derartiger Befehle bedarf dabei keiner Änderung der vorhandenen Befehlstypen und ihres Aufbaus.

Gemäß einer Weiterbildung der Erfindung läßt sich das die neue Betriebsart festlegende Steuersignal von einem Signal ableiten, das von einem gesonderten Befehl im steuernden Programm abhängt.

Gemäß einer anderen Weiterbildung der Erfindung kann aus dem Operationscode eines neuen Befehls, der keines der die Auswahl der Zusatzregister ermöglichenden vorgegebenen Teilfelder aufweist, eine Zusatzinformation abgeleitet werden, die bei Vorliegen des die neue Betriebsart festlegenden Steuersignals die Auswahl eines Zusatzregisters anstelle eines Mehrzweckregisters durch die in einem vorgegebenen Teilfeld dieses Befehls enthaltene Auswahlinformation zur Folge hat. Die neuen Befehle können so in einfacher Weise unter Verwendung vorhandener Befehlstypen realisiert werden.

Eine zusätzliche Ausgestaltung der Erfindung bezieht sich auf Einrichtungen für die Ermittlung des Befehlstyps und der Zusatzinformationen und auf Einrichtungen zum Umschalten der ausgewählten Leitungen für die Mehrzweckregister auf die Zusatzregister.

Einzelheiten der Erfindung werden nachfolgend anhand eines in der Zeichnung dargestellten Ausführungsbeispiels näher erläutert.

Im einzelnen zeigen

FIG 1     ein Blockschaltbild zur Erläuterung der Umschaltung der Auswahlleitungen für die Mehrzweckregister auf die Zusatzregister im Rahmen der Befehlsausführung

FIG 2     die Aufteilung der funktionellen Teilfelder in den Befehlen abhängig von den üblichen Befehlstypen

FIG 3     die Aufteilung der funktionellen Teilfelder in den zusätzlichen neuen Befehlen.

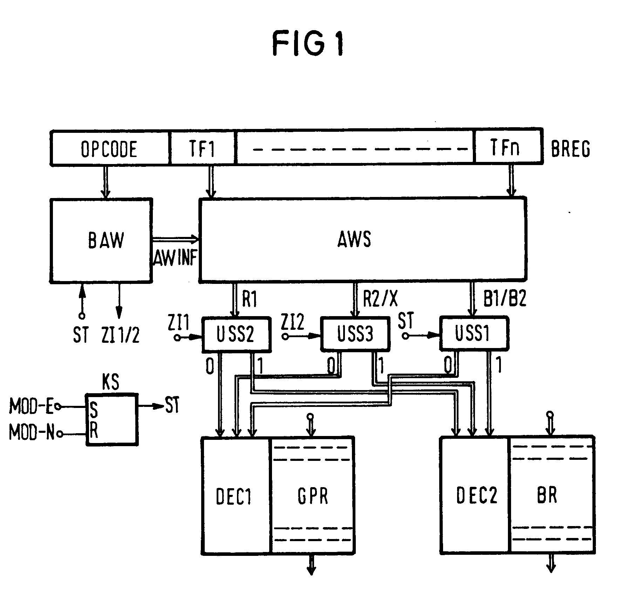

Das Blockschaltbild gemäß FIG 1 zeigt das Befehlsregister BREG, das den jeweils auszuführenden Befehl aufnimmt.

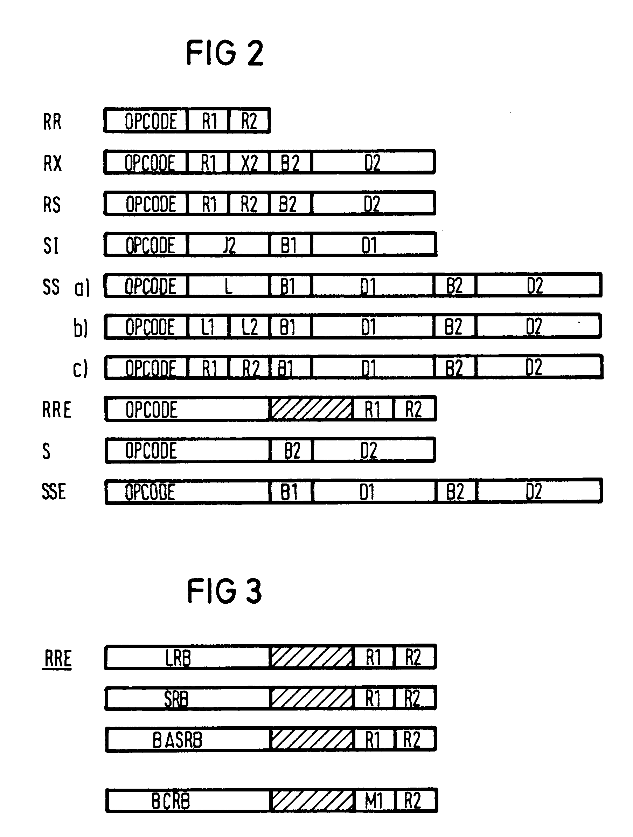

Der Aufbau dieser Befehle ist vom jeweiligen Befehlstyp abhängig. FIG 2 zeigt eine Zusammenstellung der gebräuchlichen Befehlstypen RR, RX, RS, SI, SS, RRE, S und SSE. Jeder dieser Befehle gliedert sich in ein Teilfeld OPCODE für den Operationscode und weitere Teilfelder R..., B..., I... und L ... vorgegebener funktioneller Bedeutung, von denen die Teilfelder R1, R2 und X sowie B1 und B2 Auswahlinformationen für die Mehrzweckregister beinhalten.

Da die Lage der Teilfelder gleicher funktioneller Bedeutung, zum Beispiel R1, in den auszuwertenden Befehlen jeweils vom Befehlstyp abhängig ist, muß bei jeder Befehlsauswertung eines im Befehlsregister BREG bereitstehenden Befehls zunächst das jeweils zutreffende Teilfeld ausgewählt werden. Um dies zu verdeutlichen, ist in FIG 1 das Befehlsregister BREG in das Teilfeld OPCODE und die weiteren Teilfelder TF1 bis TFn unterteilt. Die Ausgänge der Teilfelder TF1 bis TFn sind auf eine Auswahlschaltung AWS geführt, die anhand der vom Befehlsauswerter BAW gelieferten Auswahlinformation AWINF zum Beispiel die Information des jeweiligen Teilfeldes R1 eines Befehls zum Ausgang R1 für die Ansteuerung der Decodierschaltung DEC1 zur Auswahl eines der Mehrzweckregister GPR durchschaltet. In gleicher Weise sind normalerweise die Informationen der funktionellen Teilfelder R2, X, B1 und B2 an den Ausgängen R2/X und B1/B2 für die Ansteuerung der Mehrzweckregister GPR verfügbar.

Gemäß der Erfindung ist nun neben den Mehrzweckregistern GPR eine gleich große Anzahl von Zusatzregistern BR vorgesehen, die über die Decodierschaltung DEC2 auswählbar sind. Diese Zusatzregister BR werden zweckmäßig durch das vorgegebene Teilfeld B1 und/oder B2 mit Basisadressen als Inhalt zur Berechnung der Hauptspeicheradresse angesteuert, das in den Befehlstypen RX, RS, SI, SS, S oder SSE enthalten ist.

Der Ausgang B1/B2 der Auswahlschaltung muß daher von der Decodierschaltung DEC1 auf die Decodierschaltung DEC2 umschaltbar sein, was mit dem Umsteuerschalter USS1 bewirkt wird.

Diese Umschaltung hängt von einem Steuersignal ST ab, das zwischen der normalen Betriebsart MOD-N ohne die Zusatzregister BR und der neuen Betriebsart MOD-E mit den Zusatzregistern BR unterscheidet. Dieses Steuersignal ST wird von einer Kippstufe KS abgeleitet, die entsprechend der jeweils vorliegenden Betriebsart MOD-N oder MOD-E zurückgesetzt oder gesetzt ist. Ob die Kippstufe KS zur Kennzeichnung der neuen Betriebsart MOD-E gesetzt ist, bestimmt zum Beispiel ein programmabhängiges Signal.

Bei normaler Betriebsart MOD-N werden also über die Ausgänge R1, R2/X und B1/B2 der Auswahlschaltung in herkömmlicher Weise nur die Mehrzweckregister GPR angesteuert, während bei der neuen Betriebsart MOD-E mit den Teilfeldern B1/B2 die Zusatzregister angesteuert werden. Damit nun zwischen den beiden Registergruppen GPR und BR ebenfalls Informationen ausgetauscht werden können, sind neue zusätzliche Befehle erforderlich, die zweckmäßigerweise wegen der vorzunehmenden Register/Register-Operation vom Typ RRE sind. Da dieser Befehlstyp aber kein Teilfeld B1 oder B2 aufweist, das im vorliegenden Falle den Zugriff auf die Zusatzregister BR ermöglicht, ist beispielsweise am Ausgang R1 der Auswahlschaltung ein weiterer Umsteuerschalter USS2 bzw. am Ausgang R2/X ein Umsteuerschalter USS3 vorgesehen, die die Umsteuerung auf die Decodierschaltung DEC2 für die Zusatzregister BR ermöglichen.

Diese Umsteuerung ist von einer aus dem Operationscode OPCODE der neuen Befehle ableitbaren Zusatzinformation ZI1 bzw. ZI2 abhängig, die aber nur wirksam wird, wenn zugleich mit dem Signal ST die neue Betriebsart angezeigt wird. Bei normaler Betriebsart lösen die neuen Befehle dagegen eine zum Programmabbruch führende Fehleranzeige aus.

FIG 3 zeigt vier solche neuen Befehle vom Typ RRE. Die Befehle LRB (Load-Register B) und SRB (Store-Register B) dienen zum Umladen in der einen oder anderen Richtung, wobei das Teilfeld R1 jeweils das auszuwählende Zusatzregister BR und das Teilfeld R2 jeweils das auszuwählende Mehrzweckregister GPR angibt. Beim Befehl LRB wird das Zusatzregister BR mit dem Inhalt des Mehrzweckregisters GPR geladen, während beim Befehl SRB der Inhalt des Zusatzregisters BR in das Mehrzweckregister GPR übertragen wird.

Neben diesen neuen Registertransferbefehlen können auch andere vorhandene Befehlsarten durch neue Befehle mit Nutzung der Zusatzregister BR ergänzt werden, so zum Beispiel Sprungbefehle. FIG 3 zeigt zwei solche zusätzlichen Sprungbefehle BASRB und BCRB.

Beim Befehl BASRB (Branch and Safe in BR) wird der Befehlszählerstand im durch das Teilfeld R1 bezeichneten Zusatzregister BR gespeichert, während die Sprungadresse im durch das Teilfeld R2 gekennzeichneten Zusatzregister BR zu finden ist.

Der andere Sprungbefehl BCRB (Branch on Condition über BR) findet die Sprungadresse bei erfüllter Sprungbedingung in einem Zusatzregister BR.

## Patentansprüche

1. Schaltungsanordnung für Verarbeitungseinheiten einer Zentraleinheit mit einer Reihe von Mehrzweckregistern, die durch in für die einzelnen Befehlstypen festgelegten Teilfeldern der einzelnen zu verarbeitenden Befehle enthaltenen Auswahlinformationen im Rahmen der Befehlsausführung auswählbar sind, **dadurch gekennzeichnet,** daß neben der normalen Betriebsart (MOD-N) für die Befehlsausführung eine zweite Betriebsart (MOD-E) vorgesehen ist, bei der im Gegensatz zur normalen Betriebsart (MOD-N) anstelle des üblicherweise auszuwählenden Mehrzweckregisters (GPR) ein dazu korrespondierendes Zusatzregister (BR) eines zweiten Registersatzes durch dieselbe, in einem abhängig vom Befehlstyp (z.B. RS) vorgegebenen Teilfeld (z.B. B2) bereitgestellte Auswahlinformation auswählbar ist (über USSI) , und daß zusätzliche neue Befehle vorgesehen sind, durch die Verbindungen zwischen den Zusatzregistern (BR) und den Mehrzweckregistern (GPR) und/oder einem anderen Ort zur Übertragung von Informationen herstellbar sind.

2. Schaltungsanordnung nach Anspruch 1, **dadurch gekennzeichnet,** daß ein die neue Betriebsart (MOD-E) festlegende Steuersignal (ST) von einem programmabhängigen Signal ableitbar ist.

3. Schaltungsanordnung nach Anspruch 1 oder 2, **dadurch gekennzeichnet,** daß aus dem Operationscode (OPCODE) der neuen Befehle eine Zusatzinformation (ZI) ableitbar ist, durch die bei Vorliegen der neuen Betriebsart (MOD-E) mit der in einem vorgegebenem Teilfeld (zum Beispiel R1) des zugehörigen Befehls enthaltenen Auswahlinformation anstelle eines Mehrzweckregisters (GPR) unmittelbar das korrespondierende Zusatzregister (BR) auswählbar ist.

4. Schaltungsanordnung nach einem der Ansprüche 1 bis 3,
**dadurch gekennzeichnet,** daß durch einen das Teilfeld für den Operationscode (OPCODE) eines jeden Befehls auswertenden Befehlsauswerters (BAW) der jeweilige Befehlstyp und die Zusatzinformation (ZI1 bzw. ZI2) ermittelbar sind und daß durch Umsteuerschalter (zum Beispiel USS1 bis USS3) die durch die Auswahlinformationen in den einzelnen betroffenen Teilfeldern (zum Beispiel R1, R2/X und B1) im Befehl angegebenen Auswahlleitungen für die Mehrzweckregister (GPR) auf die Zusatzregister (BR) abhängig von dem die neue Betriebsart festlegenden Steuersignal (ST) oder der ermittelten wirksamen Zusatzinformation (ZI1 bzw. ZI2 ) umschaltbar sind.

## Claims

1. Circuit arrangement for processing units of a central processing unit with a plurality of general-purpose registers which can be selected during the course of instruction execution by means of selection information contained in subfields of the individual instructions to be processed defined for the individual instruction types, characterised in that, in addition to the normal mode (MOD-N) for the instruction execution, a second mode (MODE) is provided in which, in contrast to the normal mode (MOD-N), instead of the general-purpose register (GPR) usually to be selected, a corresponding extension register (BR) of a second register set can be selected (via USSI) by means of the same selection information provided in a subfield (for example B2) predetermined depending on the instruction type (for example RS), and in that additional new instructions are provided, by means of which it is possible to establish the connections between the extension registers (BR) and the general-purpose registers (GPR) and/or another location for the transmission of information.

2. Circuit arrangement according to Claim 1, characterised in that a control signal (ST) which defines the new mode (MOD-E) can be extracted from a program-dependent signal.

3. Circuit arrangement according to Claim 1 or 2, characterised in that an additional information item (ZI) can be extracted from the operation code (OPCODE) of the new instructions, by means of which it is possible to select the corresponding extension register (BR) directly instead of a general-purpose register (GPR) with the selection information contained in a predetermined subfield (for example R1) of the associated instruction when the new mode (MOD-E) is present.

4. Circuit arrangement according to one of Claims 1 to 3, characterised in that it is possible to determine the respective instruction type and the additional information (ZI1 and ZI2) by means of an instruction evaluator (BAW) which evaluates the subfield for the operation code (OPCODE) of each instruction, and in that the selection lines for the general-purpose registers (GPR) indicated in the instruction by the selection information in the individual subfields concerned (for example R1, R2/X and B1) can be switched over by means of rerouting switches (for example USS1 to USS3) to the extension registers (BR) depending on the control signal (ST) defining the new mode or the effective additional information (ZI1 and ZI2 respectively) determined.

## Revendications

1. Montage pour des unités de traitement d'une unité centrale comportant une série de registres à usages multiples, qui, dans le cadre de l'exécution d'instructions, peuvent être sélectionnées par des informations de sélection contenues dans des zones partielles, fixées pour les différents types d'instructions, des différentes instructions à traiter, caractérisé par le fait qu'en dehors du type de fonctionnement normal (MOD-N) pour l'exécution des instructions, il est prévu un second mode de fonctionnement (MOD-E), lors duquel, contrairement au type de fonctionnement normal (MOD-N), et à la place du registre à usages multiples (GP), qui doit être habituellement sélectionné, un registre supplémentaire (BR), qui correspond au registre à usages multiples, d'un second ensemble de registres peut être sélectionné (par l'intermédiaire de USS1), au moyen de la même information de sélection préparée dans une zone partielle (par exemple B2) prédéterminée en fonction du type d'instructions (par exemple RS), et qu'il est prévu de nouvelles instructions supplémentaires grâce auxquelles des liaisons peuvent être établies entre les registres supplémentaires (BR) et les registres à usages multiples (GPR) et/ou en un autre lieu pour la transmission d'informations.

2. Montage suivant la revendication 1, caractérisé par le fait qu'un signal de commande (ST), qui fixe le nouveau type de fonctionnement (MOD-E), peut être dérivé d'un signal qui dépend du programme.

3. Montage suivant la revendication 1 ou 2 caractérisé par le fait qu'une information supplémentaire (ZI) peut être tirée du code opération (OPCODE) des nouvelles instructions, information à l'aide de laquelle, dans le cas de la présence du nouveau type de fonctionnement (MOD-E), le registre supplémentaire correspondant (BR) peut directement être sélectionné, à la place d'un registre à usages multiples (GPR), au moyen de l'information de sélection contenue dans une zone partielle prédéterminée (par exemple R1) de l'instruction associée.

4. Montage suivant l'une des revendications 1 à 3, caractérisé par le fait que le type respectif d'instruction et l'information supplémentaire (ZI1 ou ZI2) peuvent être déterminés par la zone partielle prévue pour le code opération (OPCOD) d'un dispositif d'évaluation d'instructions (BAW) qui évalue chaque instruction, et que les lignes de sélection, indiquée dans l'instruction par les informations de sélection dans les différentes zones partielles concernées (par exemple R1,R2/X et B1), pour les registres à usages multiples (GPR) peuvent être commutées, par des commutateurs d'inversion de commande (par exemple USS1 à USS3), sur les registres supplémentaires (BR), en fonction du signal de commande (ST) qui fixe le nouveau type de fonctionnement ou en fonction de l'information supplémentaire active déterminée (ZI1 ou ZI2).

# FIG 1

# FIG 2

RR

| OPCODE | R1 | R2 |

RX

| OPCODE | R1 | X2 | B2 | D2 |

RS

| OPCODE | R1 | R2 | B2 | D2 |

SI

| OPCODE | J2 | B1 | D1 |

SS  a)

| OPCODE | L | B1 | D1 | B2 | D2 |

b)

| OPCODE | L1 | L2 | B1 | D1 | B2 | D2 |

c)

| OPCODE | R1 | R2 | B1 | D1 | B2 | D2 |

RRE

| OPCODE | ///// | R1 | R2 |

S

| OPCODE | B2 | D2 |

SSE

| OPCODE | B1 | D1 | B2 | D2 |

# FIG 3

RRE

| LRB | ///// | R1 | R2 |

| SRB | ///// | R1 | R2 |

| BASRB | ///// | R1 | R2 |

| BCRB | ///// | M1 | R2 |

8